# EUROPEAN PATENT SPECIFICATION

(11) **EP 2 527 209 B1**
(45) Date of publication and mention of the grant of the patent: **17.04.2013**
(21) Application number: 11167723.3
(22) Date of filing: 26.05.2011
(51) Int. Cl.: B60R 21/237

(54) **A method of packaging an airbag**
Verfahren zum Verpacken eines Airbags
Procédé d'emballage d'un airbag

(43) Date of publication of application: 28.11.2012
(73) Proprietor: Autoliv Development AB, 447 83 Vårgårda (SE)
(72) Inventor: Jansen, Nicolaas, Leonardus Maria, 467 32 Grästorp (SE); Sahlberg, Filip, 412 61 Göteborg (SE); Johansson, Jack, 438 32 Landvetter (SE); Carlstedt, Lars, 447 95 Vargarda (SE)
(74) Representative: Parry, Simon James

(56) References cited:
- EP-A1- 0 787 673
- GB-A- 2 399 795
- US-A1- 2002 070 541
- US-A1- 2008 174 093
- US-B1- 6 196 577

## Description

The present invention relates to a method of packaging an airbag for use in a motor vehicle safety arrangement. Whilst not being limited to any particular application in such a safety arrangement, the invention is particularly useful in packaging an airbag intended for use as part of a hood- or bonnet-lifting pedestrian safety arrangement.

It has been proposed previously to provide a motor vehicle with a safety arrangement configured to raise or lift the rear part of the vehicle's hood or bonnet in response to the receipt of a signal indicative of the vehicle impacting, or being likely imminently to impact, with a pedestrian or cyclist. The theory behind such arrangements is that by raising the hood or bonnet, it becomes spaced further from the vehicle's engine and other components located beneath the hood or bonnet, thereby providing a space within which the hood or bonnet is permitted to deform under the inertia of impact with the pedestrian's head or torso, and to thereby absorb energy in a more controlled and progressive manner than if the hood or bonnet were not spaced from the engine.

Various different mechanisms have been proposed to lift the rear part of a vehicle's hood or bonnet in the manner described above. One such proposal involves the use of one or more inflatable airbags located beneath the rear part of the hood or bonnet and mounted to the chassis of the motor vehicle. Upon the receipt of an actuating signal from a suitable sensor, the or each airbag is rapidly inflated via the injection of a flow of high pressure gas into the airbag from an inflator, and thus expands and acts between the hood or bonnet and the chassis of the vehicle to lift the hood or bonnet. Because of the space-constraints below the hood or bonnet of a typical modern passenger motor vehicle and the required height through which the hood or bonnet must be lifted to offer effective protection to a pedestrian, it has been proposed to configure such airbags to be generally elongate, and most preferably substantially cylindrical in form in their inflated condition, to thereby provide sufficient height to lift the hood or bonnet whilst minimising the "footprint" of the airbag unit.

GB 2399795 discloses a method of packaging an airbag according to the preamble of claim 1.

It has been found to be difficult to configure such airbags, particular in relation to the small inflators which are typically used for their inflation, to ensure reliable inflation in a manner effective to drive the hood or bonnet away from the chassis at an early stage during inflation of the airbag. One of the problems in this respect is ensuring that the elongate airbag achieves sufficient stability to lift the hood or bonnet during an early stage in its inflation.

It is an object of the present invention to provide an improved method of packaging an airbag for use in a motor vehicle safety arrangement.

It is another object of the present invention to provide an improved airbag for use in a motor vehicle safety arrangement.

Although the invention has been found to be particularly useful in addressing the above-mentioned problems associated with prior art hood- or bonnet-lifting arrangements, it is to be appreciated that the invention is not limited to such arrangements.

According to the present invention, there is provided a method of packaging an airbag for use in a motor vehicle safety arrangement, the method comprising the steps of: providing an airbag formed of flexible sheet material, the airbag defining an inflatable volume and being generally elongate in form having first and second ends opposed along a longitudinal axis, the first end being closed and the second end having an inlet aperture for fluid connection to an inflator, the method being characterised by an initial folding step in which a peripheral re-entrant fold is created between said first and second ends by urging the first end of the airbag inwardly towards the second end of the airbag along the longitudinal axis.

Preferably, said peripheral re-entrant fold is created by urging said first end inwardly of the airbag such that it lies generally adjacent said second end.

Advantageously, said step of urging the first end of the airbag inwardly towards the second end of the airbag involves pushing the first end towards the second end with a mandrel which is then removed from the airbag.

Conveniently, the method further comprises the step of inflating the airbag, at least partially, via the flow of inflating gas into said inflatable volume prior to said step of urging the first end towards the second end, and wherein step of urging the first end towards the second end is then performed with the airbag in said inflated condition.

Preferably, the method further comprises the step of evacuating the inflatable volume, after said step of pushing the first end towards the second end with said mandrel but before said removal of the mandrel.

Advantageously, the method further comprises a subsequent folding step in which said peripheral re-entrant fold is folded inwardly around its entire extent towards the first end of the airbag, to thereby create an additional peripheral re-entrant fold.

Conveniently, said subsequent folding step involves folding said peripheral re-entrant fold inwardly such that it lies generally adjacent said first end of the airbag.

Preferably, the method further comprises the step of rolling the airbag on itself from the region of said peripheral re-entrant fold towards said first end to form a roll of said flexible material around said re-entrant fold.

Advantageously, said step of rolling involves forming two said rolls, said rolls being formed by rolling respective regions of the re-entrant fold, opposed across the airbag, inwardly towards one another.

Conveniently, said step of rolling involves clamping the material of the airbag adjacent each said region of the re-entrant fold in a respective clamp to grip the material, rotating said clamps towards one another to form said rolls, and then removing said clamps.

Preferably, the method further comprises the step of compressing the airbag after said subsequent folding step or said rolling step to form an airbag package for insertion or retention within an airbag housing.

Advantageously, the method further comprises the step of connecting the second end of the airbag to at least part of an airbag housing prior to any other method steps recited in the preceding claims.

Conveniently, the airbag is substantially cylindrical in form

According to another aspect of the present invention, there is provided an airbag packaged by a method as defined above.

Preferably, the airbag is provided as part of a hood- or bonnet-lifting safety arrangement for a motor vehicle.

So that the invention may be more readily understood, and so that further features thereof may be appreciated, embodiments of the invention will now be described by way of example with reference to the accompanying drawings in which:
Figure 1 is a schematic perspective view of a sheet of flexible material used to produce an airbag in accordance with the present invention;
Figure 2 is a schematic perspective view of a partially formed elongate airbag made from the sheet shown in figure 1;
Figure 3 is a plan view of the airbag showing the bag laid flat and closed at one end;
Figure 4 is a view showing the closed end of the airbag;
Figure 5 is a diagrammatic sectional view showing the open end of the airbag clamped to a part of an airbag housing;
Figure 6 is a perspective view showing a packaging step in which a tool is used to create a re-entrant fold in the airbag;
Figure 7 is a view corresponding generally to that of figure 6, showing the partially packaged airbag after removal of the tool shown in figure 6;
Figure 8 is a diagrammatic sectional view showing the partially packaged airbag with the peripheral re-entrant fold;
Figure 9 is a perspective view showing the airbag from the front and above during a subsequent packaging step;
Figure 10 is a perspective view showing the airbag during the step of figure 9 from the front and one side;
Figure 11 is a plan view from above showing the airbag during the step of figure 9,
Figure 12 is a perspective view showing the commencement of a subsequent rolling step using tools;
Figure 13 shows a further stage of the rolling step;

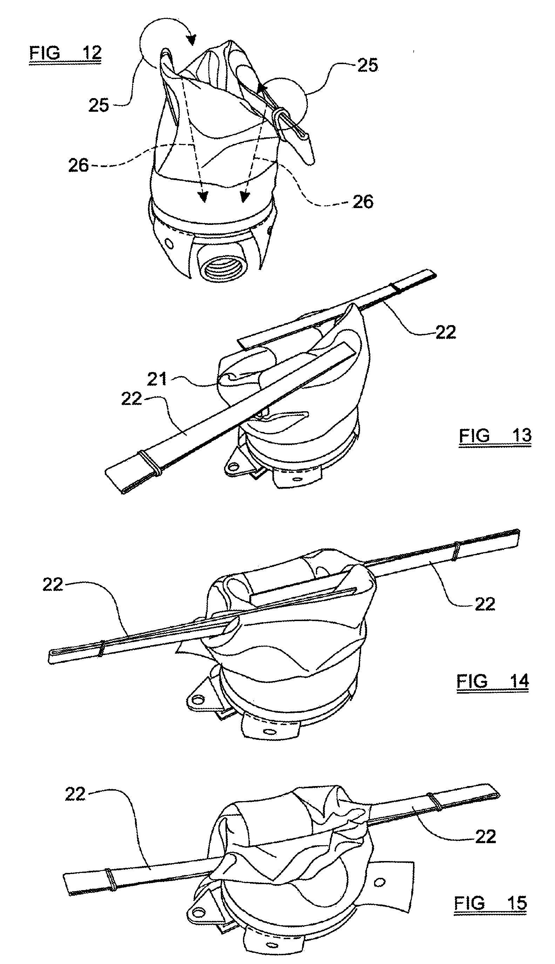

Figure 13 shows a still further stage of the rolling step;
Figure 15 shows the partially packaged airbag at completion of the rolling step;

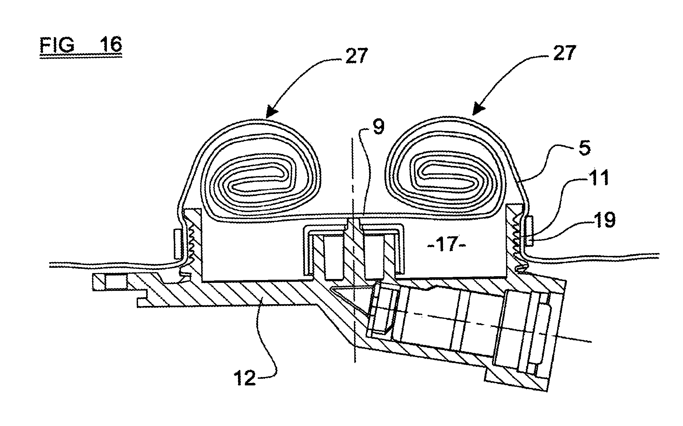

Figure 16 is a diagrammatic sectional view showing the partially packaged airbag after completion of the rolling step;

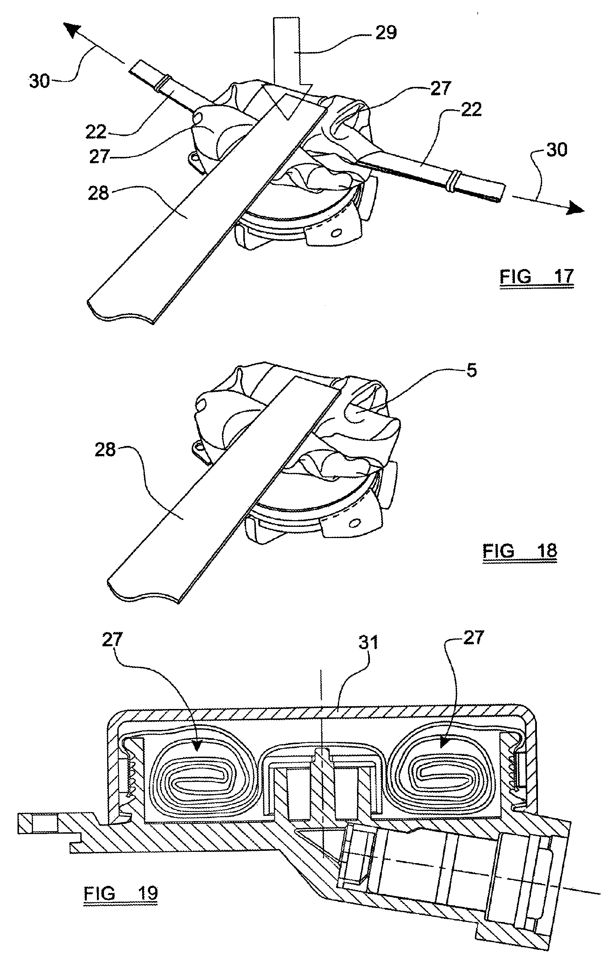

Figure 17 is a perspective view showing a subsequent compression step in which the partially packaged airbag is compressed;
Figure 18 is a view corresponding generally to that of figure 17, but showing the rolling tools removed;
Figure 19 is a view corresponding generally to that of figure 16 but showing the airbag after the compression step and fully packaged within the housing;

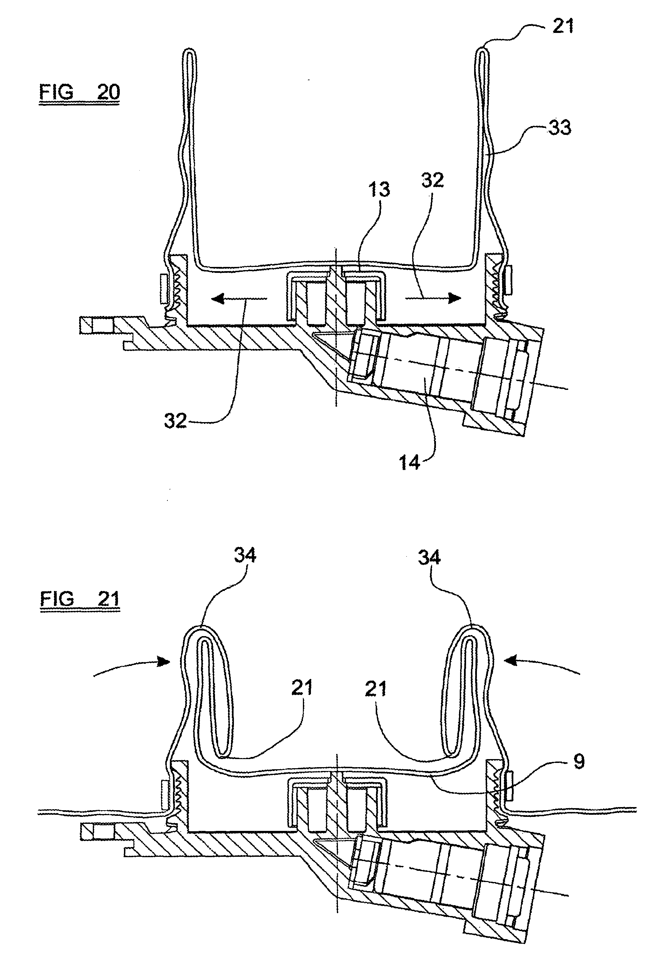

Figure 20 is a schematic illustration showing the inflation characteristic imparted to the airbag by the peripheral re-entrant fold during inflation of the airbag; and

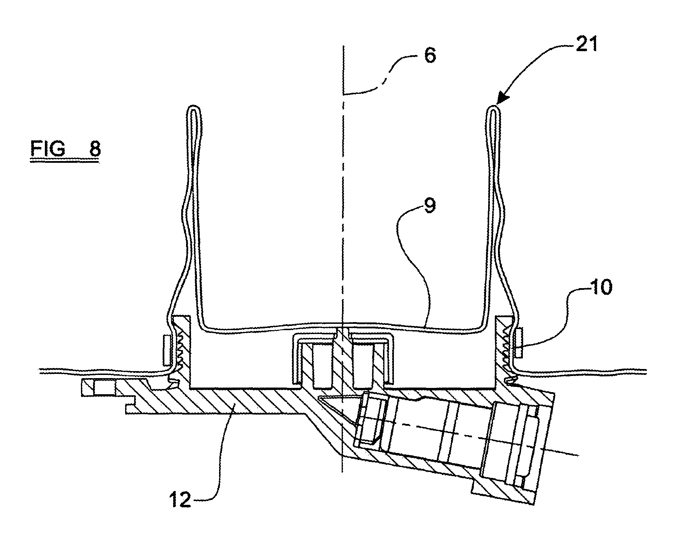

Figure 21 is a sectional view corresponding generally to that of figure 8, but showing an airbag being packaged by a method in accordance with another embodiment, in which a second peripheral re-entrant fold is created in the airbag.

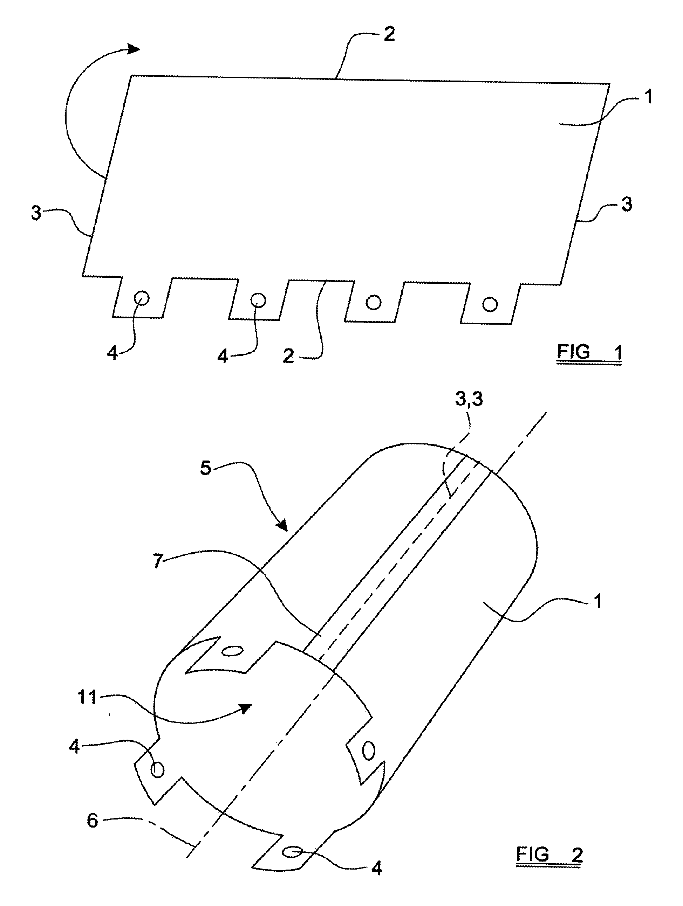

Referring initially to figure 1, there is shown a sheet 1 of flexible material from which an airbag in accordance with the present invention is produced. The sheet 1 is preferably formed from woven fabric, although it is to be appreciated that alternative materials could be used for the sheet instead such as, for example, a thin film of flexible plastics material. The sheet 1 is generally rectangular in form having a pair of opposed long edges 2 and a pair of opposed short edges 3. One of the long edges 2 may be provided with a plurality of spaced apart projecting tabs 4 as shown, each tab being detachable from the main part of the sheet generally as proposed in co-pending European Patent Application No. 1102509.5.

In order to form the airbag 5 as shown in figure 2, the sheet 1 is rolled about its transverse axis to bring its two short edges 3 together, thereby creating an elongate tube or cylinder having a longitudinal axis 6. The two short edges 3 of the sheet are then maintained in position adjacent or aligned with one another by the application of an elongate strip 7 of flexible material which is preferably formed from the same material as the sheet. The strip 7 may be affixed to the adjacent short edge regions by stitching or via the use of a suitable adhesive. Preferably the strip 7 is slightly longer the short side edges 3 of the sheet 1 to permit end parts of the strip 7 to be folded inside the cylinder which is formed.

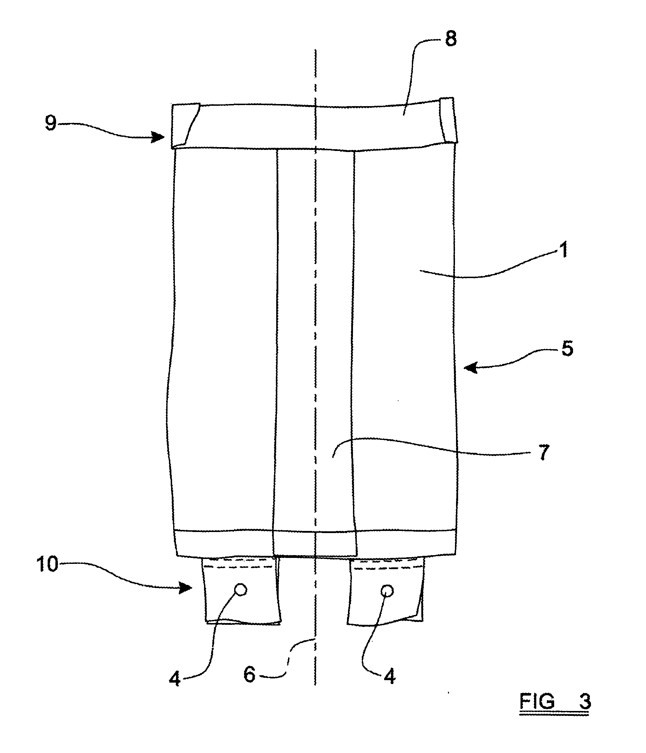

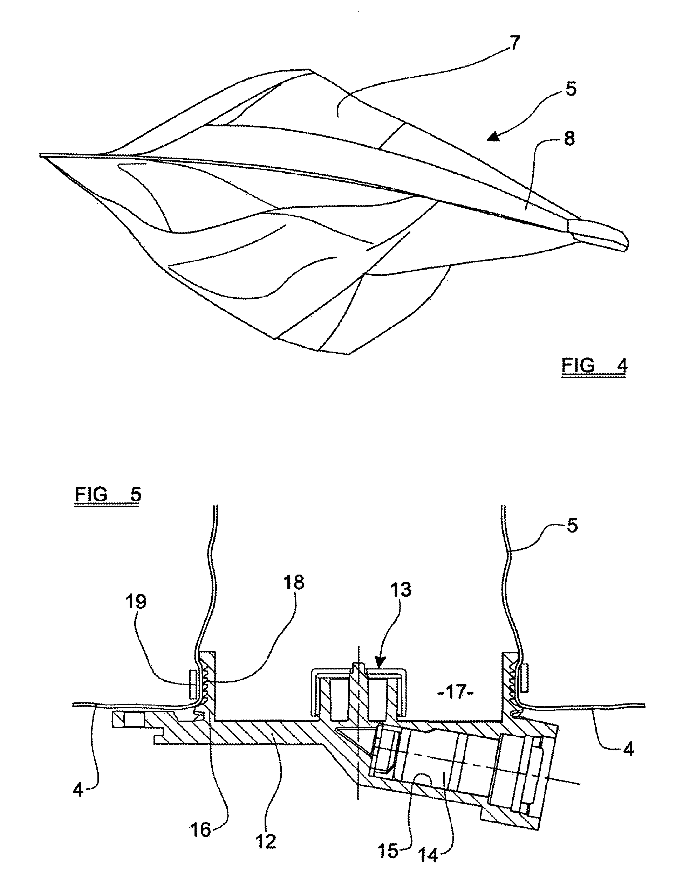

The airbag 5 is completed by the application of a second strip 8 of the same material to close the end of the cylinder opposite to the tabs 4, as shown in figure 3. The end of the cylinder is squashed flat and the second strip 8 is folded along its longitudinal axis and affixed to the opposing sides of the airbag material to close the end of the cylinder. The second strip 8 may be affixed in this way by stitching or via the use of a suitable adhesive. Figure 4 shows the second strip 8 folded and affixed to the sheet 1 in this manner, as viewed from above.

As will be appreciated, the airbag 5 which is thus formed defines an inflatable volume and is generally elongate in form having first and second ends 9, 10 opposed along a longitudinal axis 6. The first end 9 is closed (by the second strip 8) and the second end 10 is open. The second end 10 thus defines an inlet aperture 11 (shown most clearly in figure 2) for fluid connection to an inflator as will be described.

It is to be appreciated at this juncture that although a particular method has been described above for the formation of the elongate airbag 5, other methods can be used instead for its formation. For example, in a variation of the above-described method the two strips 7, 8 could be replaced by a single strip affixed to the sheet so as to extend along its aligned short edges 3 and then to turn through an angle of approximately 90 degrees to then extend across the end region of the airbag. Alternatively, the airbag 5 could be formed without the use of any such strips at all; the edges of the sheet being interconnected by lines of stitching. It is even envisaged that the elongate airbag could be formed via a so-called "one-piece-weaving" technique, know *per* se, in which the entire airbag is woven into the general shape illustrated. The important aspects of the airbag 5 are that it is elongate with one end 9 being closed and the other end 10 defining an inlet aperture 11.

Turning now to consider figure 5, the airbag 5 is shown connected to the base 12 of an airbag housing into which the airbag is to packaged. The base 12 of the housing comprises a central gas deflector 13 which is provided in fluid communication with an inflator in the form of a gas generator 14 which is received within a bore 15 formed as an integral part of the base 12 of the housing. The base 12 further comprises an integrally formed upstanding wall 16 which extends around and is spaced outwardly from the central gas deflector 13 so as to define a generally annular space 17 between the wall and the deflector. The upstanding wall 16 is formed so as to define a series of serrations or gripping formations 18 on its outermost surface. The airbag 5 is mounted to the base 12 by positioning the gas inlet aperture 11 at its open end 10 over the wall 16, thus effectively inserting the wall into the airbag, whereupon a clamping ring 19 is fitted around the open end of the airbag 5 and which cooperates with the serrations or gripping formations 18 to clampingly grip the open end 10 of the airbag. Figure 5 shows the projecting tabs 4 extending outwardly from the open end 10 of the airbag. The function of the tabs is not essential to an understanding of the present invention, but for completeness they are provided to ensure proper positioning of the airbag relative to the base 12, in the manner described in co-pending European Patent Application No. 1102509.5.

As will be described in more detail below, the method of the present invention is used to package the airbag 5 into the airbag housing, and more particularly can be used to package the airbag generally into the space 17, whereupon a cover is releasably connected to the base to enclose the packaged airbag. As will be appreciated, via the above-described connection of the inlet aperture 11 of the airbag to the base 12, the inlet aperture is effectively fluidly connected to the gas generator 14. Thus, actuation of the gas generator 14 is effective to direct a volume of inflating gas through the deflector 13 and into the inflatable volume of the airbag 5, to thereby inflate the airbag to its elongate condition and drive the cover (not shown in figure 5) upwardly away from the base 12. The illustrated unit is thus particularly useful as a hood or bonnet lifting device in a pedestrian safety arrangement for a motor vehicle. In such an arrangement, the base 12 is mounted to the structure of the vehicle beneath the rear part of the hood or bonnet such that upon actuation of the unit, inflation of the airbag towards its elongate configuration raises the rear part of the hood or bonnet. It is important in such arrangements to ensure that the airbag 5, especially during an initial stage of its inflation, achieves sufficient stability to urge the weight of the hood or bonnet upwardly. The packaging method of the present invention has been found to improve this stability as will now be described.

In order to begin packaging the airbag 5 into the base 12, the airbag 5 is initially lightly or partially inflated. This can be achieved prior to insertion of the gas generator 14 into the bore 15 by flowing air or other inflating gas through the bore 15 and thus into the inflatable volume of the airbag 5. This is done to remove any significant folds or creases from the airbag before packaging begins.

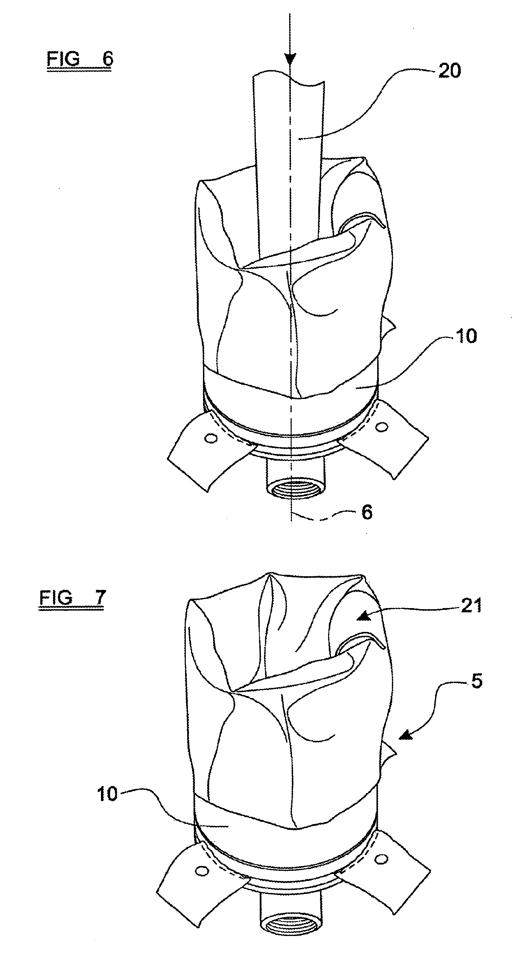

Following the initial inflation of the airbag 5 as described above, and preferably whilst the flow of inflating air or gas is maintained, the upper closed end 9 of the airbag is pushed downwardly towards the open end 10 by a convenient tool such as an elongate mandrel 20 as shown in figure 6. As will be appreciated, downwards movement of the mandrel along the longitudinal axis 6 of the airbag is effective to urge the closed end 9 of the airbag inwardly of the airbag such that it moves towards the lower open end 10 of the airbag. The mandrel 20 is then retained in the downwardly pressing position illustrated in figure 6, whilst the flow of inflating air or gas into the airbag is stopped, and preferably also whilst a light degree of suction is then applied to the bore 15 of the base to evacuate, at least partially, the inflatable volume of the airbag. After the flow of inflating air or gas has been stopped, and whilst any such suction is applied to the bore 15, the mandrel 20 is then removed from the airbag whereupon the suction can also be stopped. The resulting airbag is illustrated in figure 7 in perspective view and in figure 8 in schematic sectional view. The use of light suction as described above is helpful to ensure that the airbag remains in the configuration illustrated whilst the mandrel 20 is withdrawn.

As will be noted from figures 7 and 8, the above-mentioned steps are effective to create a peripheral re-entrant fold 21 around the airbag 5, between its two ends. In the arrangement illustrated the re-entrant fold 21 is formed approximately midway between the two ends of the airbag such that the closed end 9 lies generally adjacent the open end 10.

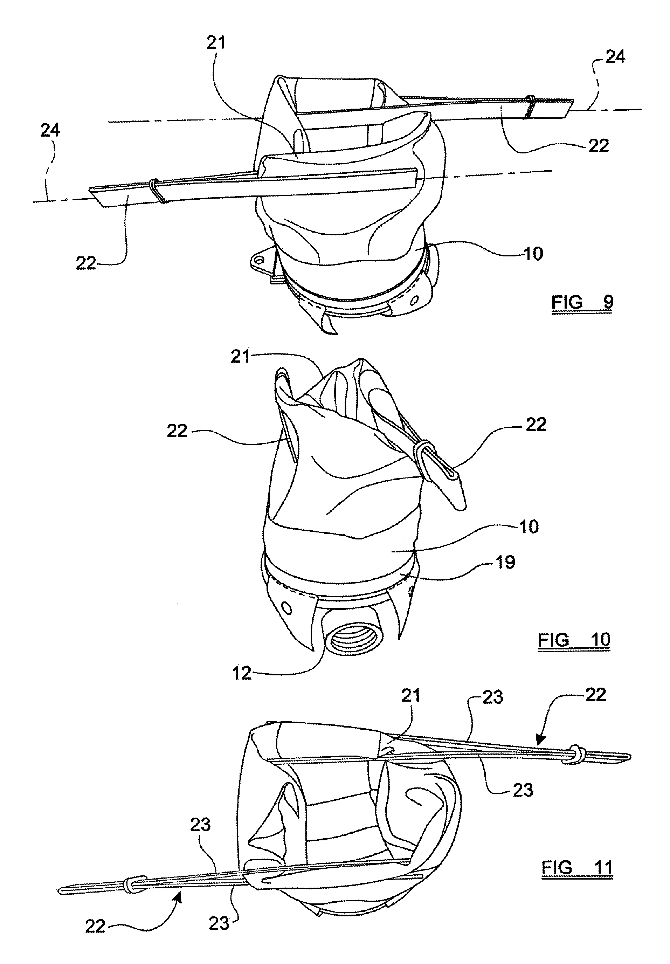

In one embodiment of the present invention, following creation of the peripheral re-entrant fold 21 as described above, the airbag is then rolled and compressed into a tight package as will now be described with reference to figures 9 to 20.

Figures 9-11 each show the folded airbag gripped between a pair of spaced apart clamps 22. The clamps 22 may form part of an automated apparatus for packaging the airbag, although for clarity the clamps 22 are simply illustrated in isolation in the drawings. Each clamp 22 is fitted to the folded airbag 5 to grip the material of the airbag in a respective region of the re-entrant fold 21, the regions being opposed across the airbag. As will be noted, the clamps 22 each comprise a pair of elongate clamp members 23 which are biased towards one another or are otherwise moveable in a clamping manner to grip the material of the airbag. The clamps 22 are each applied to the airbag from opposite sides and are arranged to lie substantially parallel to one another across the airbag 5 and also substantially parallel to the plane in which the inlet aperture 11 at the open end 10 of the airbag lies.

As illustrated in figure 12, when the clamps 22 have both been applied to the airbag 5 as described above, they are rotated towards one another, generally about their respective axes 24 as denoted by arrows 25, and generally downwardly towards the open end 11 of the airbag as denoted bv arrows 26. Figure 13 shows a stage during the rotation of the clamps 24 in which the clamps have each been rotated towards one another through an angle of approximately 90 degrees about their respective axes. Figure 14 shows a subsequent stage during the rotation of the clamps 24 in which they have each been rotated through an angle of approximately 180 degrees about their respective axes. Figure 15 shows the completion of the rolling step in which, in this embodiment, the clamps have been rotated through a total angle of approximately 270 degrees about their respective axes. As will be appreciated, this rotation of the clamps is thus effective to create two respective rolls 27 in the material of the airbag 5, as illustrated most clearly in figure 16.

The folded and rolled airbag 5, formed via the method steps described above, is then compressed and pressed into the space 17 defined by the base 12 of the housing. This compression step is illustrated in figure 17 which shows a pressing tool 28 having been brought into contact with the top of the two rolls 27. The pressing tool is urged downwardly, as denoted by arrow 29, with a force sufficient to compress the two rolls 27 and thereby press the folded and rolled airbag towards the space defined by the base 12 as illustrated. Whilst the pressing force is applied in this manner the two clamps 22 are then removed from the airbag 5 by sliding them both outwardly as denoted by arrows. Further compression then occurs, together with optional inward folding of any parts of the airbag material still projecting outwardly from the base 12.

Figure 19 shows the airbag tightly packaged and retained beneath a cover 31 which is releasably connected to the base 12 in a known manner.

It has been found that the creation of the initial peripheral re-entrant fold 21 provides the packaged airbag 5 with an inflation characteristic which provides improved stability to the airbag, particularly in the early stages of inflation where stability is an important factor in the function of a hood- or bonnet-lifting arrangement in order to move the weight of the hood or bonnet against its inertia. Figure 20 is a schematic illustration which illustrates the principle behind this inflation characteristic. As will be appreciated, upon actuation of the gas generator 14, a large volume of inflating gas is directed through the deflector arrangement 13 and into the inflatable volume of the packaged airbag 5 in a generally radial manner as denoted by arrows 32. Due the manner in which the airbag 5 is packaged, the rolls 27 of the airbag immediately begin to unfurl as the airbag becomes inflated. This continues until the airbag 5 attains a partially inflated configuration generally as illustrated in figure 20 (noting of course that figure 20 is merely schematic in this sense and is not intended to represent an entirely accurate representation of the partially inflated airbag. Nevertheless, it will be noted that the presence of the peripheral re-entrant fold 21 is effective to define a generally cylindrical pocket 33 of inflating gas in the partially inflated airbag, the pocket taking the shape illustrated as the rolls 27 become unfurled. This pocket 33 is peripheral is peripheral in the sense that it is formed around the periphery of the cylindrical airbag. The effect of the pocket 33 is thus to define a relatively small space in which the inflating gas will reach significant internal pressure at an early stage in the deployment of the airbag 5, and which is around the periphery of the airbag to provide good stability to the airbag 5.

As will be noted, in the particular arrangement illustrated, because of the angle of the gas generator 14 relative to the longitudinal axis of the airbag, there can be a tendency in this arrangement for the gas to be directed into to inflatable volume of the airbag 5 with a significant component of forces similarly angled relative to the axis of the airbag 5. This can be the case even despite the presence of the deflector 13. Nevertheless, it has been found that the presence of the peripheral re-entrant fold 21 also helps to prevent airbag 5 inflating at a significant angle to the vertical, in the orientation illustrated.

Whilst the invention has been described above with specific reference to a particular embodiment of the present invention, it is to be appreciated that certain modifications can be made without departing from the scope of the invention. For example, turning to consider figure 21, it is proposed that in variants of the packaging method described above an additional peripheral re-entrant fold is created after the first. More particularly, it is envisaged that after creation of the first re-entrant fold 21 as described above, the first re-entrant fold 21 is then folded inwardly around its entire extent towards the first closed end 9 of the airbag 5 to form the second re-entrant fold 33. As will be noted, in the fold arrangement of figure 21, the first re-entrant fold 21 thus becomes located generally adjacent the first closed end 9 of the airbag 5.

After creation of the two re-entrant folds 21, 33, the remaining upstanding parts of the airbag 5 may then be folded inwardly as denoted by arrows 35 and thereafter compressed or otherwise folded and/or rolled into a tight package for receipt beneath the cover of the housing in a similar manner to the previously described embodiment.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A method of packaging an airbag (5) for use in a motor vehicle safety arrangement, the method comprising the steps of: providing an airbag (5) formed of flexible sheet material (1), the airbag defining an inflatable volume and being generally elongate in form having first and second ends (9, 10) opposed along a longitudinal axis (6), the first end (9) being closed and the second end (10) having an inlet aperture (11) for fluid connection to an inflator (15), the method being **characterised by** an initial folding step in which a peripheral re-entrant fold (21) is created between said first and second ends (9, 10) by urging the first end (9) of the airbag inwardly towards the second end (10) of the airbag along the longitudinal axis (6).

2. A method according to claim 1, wherein said peripheral re-entrant fold (21) is created by urging said first end (9) inwardly of the airbag (5) such that it lies generally adjacent said second end (10).

3. A method according to claim 1 or claim 2, wherein said step of urging the first end (9) of the airbag (5) inwardly towards the second end (11) of the airbag involves pushing the first end (9) towards the second end (10) with a mandrel (20) which is then removed from the airbag (5).

4. A method according to any preceding claim, further comprising the step of inflating the airbag (5), at least partially, via the flow of inflating gas into said inflatable volume prior to said step of urging the first end (9) towards the second end (10), and wherein step of urging the first end (9) towards the second end (10) is then performed with the airbag (5) in said inflated condition.

5. A method according to claim 4 as dependant upon claim 3, further comprising the step of evacuating the inflatable volume, after said step of pushing the first end (9) towards the second end (10) with said mandrel (20) but before said removal of the mandrel.

6. A method according to any preceding claim, further comprising a subsequent folding step in which said peripheral re-entrant fold (21) is folded inwardly around its entire extent towards the first end (9) of the airbag, to thereby create an additional peripheral re-entrant fold (34).

7. A method according to claim 6, wherein said subsequent folding step involves folding said peripheral re-entrant fold (21) inwardly such that it lies generally adjacent said first end (9) of the airbag.

8. A method according to any one of claims 1 to 5, further comprising the step of rolling the airbag (5) on itself from the region of said peripheral re-entrant fold (21) towards said first end (10) to form a roll (27) of said flexible material around said re-entrant fold (21).

9. A method according to claim 8, wherein said step of rolling involves forming two said rolls (27), said rolls being formed by rolling respective regions of re-entrant fold (21), opposed across the airbag, inwardly towards one another.

10. A method according to claim 9, wherein said step of rolling involves clamping the material of the airbag (5) adjacent each said region of the re-entrant fold (21) in a respective clamp (22) to grip the material, rotating said clamps (22) towards one another to form said rolls (27), and then removing said clamps (22).

11. A method according to any one of claims 6 to 10, further comprising the step of compressing the airbag (5) after said subsequent folding step or said rolling step to form an airbag package for insertion or retention within an airbag housing (12, 31).

12. A method according to any preceding claim, further comprising the step of connecting the second end (10) of the airbag (5) to at least part of an airbag housing (12) prior to any other method steps recited in the preceding claims.

13. A method according to any preceding claim, wherein the airbag (5) is cylindrical in form

14. An airbag (5) packaged by a method according to any one of the preceding claims.

15. An airbag (5) according to claim 14 provided as part of a hood- or bonnet-lifting safety arrangement for a motor vehicle.

## Patentansprüche

1. Verfahren zur Verpackung eines Airbags (5) zur Verwendung in der Sicherheitsvorrichtung eines motorisierten Fahrzeugs, wobei das Verfahren die folgenden Schritte umfasst: das Bereitstellen eines Airbags (5), der aus flexiblem Folienmaterial (1) hergestellt ist, wobei der Airbag ein aufblasbares Volumen definiert und im Allgemeinen eine längliche Form mit einem ersten und einem zweiten Ende (9, 10), die einander entlang einer Längsachse (6) entgegengesetzt liegen, aufweist, wobei das erste Ende (9) geschlossen ist und das zweite Ende (10) eine Einlassöffnung (11) zur Fluidverbindung mit einer Aufblasvorrichtung (15) aufweist, wobei das Verfahren durch einen ersten Faltschritt gekennzeichnet ist, bei dem ein einspringender Randfalz (21) zwischen dem ersten und dem zweiten Ende (9, 10) erzeugt wird, indem das erste Ende (9) des Airbags entlang der Längsachse (8) nach innen in Richtung des zweiten Endes (10) des Airbags gedrückt wird.

2. Verfahren nach Anspruch 1, worin der einspringende Randfalz (21) erzeugt wird, indem das erste Ende (9) ins Innere des Airbags (5) gedrückt wird, sodass es im Allgemeinen an das zweite Ende (10) angrenzend liegt.

3. Verfahren nach Anspruch 1 oder Anspruch 2, worin der Schritt des nach innen Drückens des ersten Endes (9) des Airbags (5) in Richtung des zweiten Endes (11) des Airbags das Drücken des ersten Endes (9) in Richtung des zweiten Endes (10) mit einem Dorn (20), der dann aus dem Airbag (5) entfernt wird, umfasst.

4. Verfahren nach einem der vorangegangenen Ansprüche, das weiters den Schritt des Aufblasens des Airbags (5) zumindest zum Teil durch das Strömen von Aufblasgas in das aufblasbare Volumen vor dem Schritt des Drückens des ersten Endes (9) in Richtung des zweiten Endes (10) umfasst und worin der Schritt des Drückens des ersten Endes (9) in Richtung des zweiten Endes (10) dann bei aufgeblasenem Zustand des Airbags (5) durchgeführt wird.

5. Verfahren nach Anspruch 4 in Abhängigkeit von Anspruch 3, das weiters den Schritt des Leerens des aufblasbaren Volumens nach dem Schritt des Drückens des ersten Endes (9) in Richtung des zweiten Endes (10) mit dem Dorn (20) aber vor dem Entfernen des Dorns umfasst.

6. Verfahren nach einem der vorangegangenen Ansprüche, das weiters einen anschließenden Faltschritt umfasst, bei dem der einspringende Randfalz (21) einmal um seine gesamte Ausdehnung nach innen in Richtung des ersten Endes (9) des Airbags gefaltet wird, um dadurch einen weiteren einspringenden Randfalz (34) zu erzeugen.

7. Verfahren nach Anspruch 6, worin der anschließende Faltschritt das Falten des einspringenden Randfalzes (21) nach innen beinhaltet, sodass er im Allgemeinen an das erste Ende (10) des Airbags angrenzend liegt.

8. Verfahren nach einem der Ansprüche 1 bis 5, das weiters den Schritt des Einrollens des Airbags (5) von dem Bereich des einspringenden Randfalzes (21) in Richtung des ersten Endes (9) umfasst, um eine Rolle (27) des flexiblen Materials rund um den einspringenden Falz (21) zu bilden.

9. Verfahren nach Anspruch 8, worin der Schritt des Einrollens das Bilden zweier solcher Rollen (27) umfasst, wobei die Rollen durch das Rollen entsprechender, auf dem Airbag genau gegenüberliegender Bereiche des einspringenden Falzes (21) nach innen in Richtung zueinander umfasst.

10. Verfahren nach Anspruch 9, worin der Schritt des Einrollens das Klemmen des Materials des Airbags (5) angrenzend an jeden Bereich des einspringenden Falzes (21) in einer jeweiligen Klemme (22), um das Material festzuhalten, das Drehen der Klemmen (22) zueinander, um die Rollen (27) zu bilden, und das anschließende Entfernen der Klemmen (22) umfasst.

11. Verfahren nach einem der Ansprüche 6 bis 10, das weiters den Schritt des Stauchens des Airbags (5) nach dem späteren Faltschritt oder nach dem Rollschritt umfasst, um ein Airbagpaket zur Einbringung oder Aufbewahrung in einem Airbaggehäuse (12, 31) zu erzeugen.

12. Verfahren nach einem der vorangegangenen Ansprüche, das weiters vor jedem anderen in den vorangegangenen Ansprüchen genannten Verfahrensschritt den Schritt des Verbindens des zweiten Endes (10) des Airbags (5) mit zumindest einem Teil eines Airbaggehäuses (12) umfasst.

13. Verfahren nach einem der vorangegangenen Ansprüche, worin der Airbag (5) eine zylindrische Form aufweist.

14. Airbag (5), verpackt durch ein Verfahren nach einem der vorangegangenen Ansprüche.

15. Airbag (5) nach Anspruch 14, der als Teil einer Motorhaubenanhebungs-Sicherheitsvorrichtung für ein motorisiertes Fahrzeug vorgesehen ist.

## Revendications

1. Procédé d'emballage d'un coussin d'air (5) pour utilisation dans un agencement de sécurité de véhicule à moteur, le procédé comprenant les étapes de : réaliser un coussin d'air (5) en un matériau de feuille flexible (1), le coussin d'air définissant un volume gonflable et ayant généralement une forme allongée ayant des première et seconde extrémités (9, 10) opposées le long d'un axe longitudinal (6), la première extrémité (9) étant fermée, et la seconde extrémité (10) ayant une ouverture d'admission (11) pour une connexion fluidique avec un dispositif de gonflage (15), le procédé étant **caractérisé par** une étape de pliage initiale dans laquelle un pli périphérique réentrant (21) est créé entre lesdites première et seconde extrémités (9, 10) en sollicitant la première extrémité (9) du coussin d'air vers l'intérieur, vers la seconde extrémité (10) du coussin d'air le long de l'axe longitudinal (6).

2. Procédé selon la revendication 1, dans lequel ledit pli périphérique réentrant (21) est créé en sollicitant ladite première extrémité (9) vers l'intérieur du coussin d'air (5) de telle sorte qu'elle se situe d'une manière généralement adjacente à ladite seconde extrémité (10).

3. Procédé selon la revendication 1 ou la revendication 2, dans lequel ladite étape de sollicitation de la première extrémité (9) du coussin d'air (5) vers l'intérieur vers la seconde extrémité (11) du coussin d'air implique la poussée de la première extrémité (9) vers la seconde extrémité (10) avec un mandrin (20) qui est ensuite retiré du coussin d'air (5).

4. Procédé selon l'une quelconque des revendications précédentes, comprenant en outre l'étape consistant à gonfler le coussin d'air (5), au moins partiellement, par l'afflux de gaz de gonflage dans ledit volume gonflable avant ladite étape consistant à solliciter la première extrémité (9) vers la seconde extrémité (10), et où l'étape de sollicitation de la première extrémité (9) vers la seconde extrémité (10) est ensuite exécutée avec le coussin d'air (5) dans ledit état gonflé.

5. Procédé selon la revendication 4 dépendant de la revendication 3, comprenant en outre l'étape consistant à évacuer le volume gonflable, après ladite étape consistant à pousser la première extrémité (9) vers la seconde extrémité (10) avec ledit mandrin (20) mais avant ledit retrait du mandrin.

6. Procédé selon l'une quelconque des revendications précédentes, comprenant en outre une étape de pliage suivante lors de laquelle ledit pli périphérique réentrant (21) est plié vers l'intérieur autour de toute son étendue vers la première extrémité (9) du coussin gonflable, pour créer ainsi un pli périphérique réentrant additionnel (34).

7. Procédé selon la revendication 6, dans lequel ladite étape de pliage subséquente implique le pliage dudit pli périphérique réentrant (21) vers l'intérieur de telle sorte qu'il se situe généralement d'une manière adjacente à ladite première extrémité (9) du coussin d'air.

8. Procédé selon l'une quelconque des revendications 1 à 5, comprenant en outre l'étape consistant à rouler le coussin d'air (5) sur lui-même à partir de la région dudit pli périphérique réentrant (21) vers ladite première extrémité (10) pour former un rouleau (27) dudit matériau flexible autour dudit pli réentrant (21).

9. Procédé selon la revendication 8, dans lequel ladite étape de roulage implique la formation de deux rouleaux précités (27), lesdits rouleaux étant formés en roulant des régions respectives du pli réentrant (21), opposées dans le coussin d'air, vers l'intérieur l'une vers l'autre.

10. Procédé selon la revendication 9, dans lequel ladite étape de roulage implique le serrage du matériau du coussin d'air (5) d'une manière adjacente à chaque région précitée du pli réentrant (21) dans un organe de serrage respectif (22) pour saisir le matériau, à faire tourner lesdits organes de serrage (22) l'un vers l'autre pour former lesdits rouleaux (27), et à retirer ensuite lesdits organes de serrage (22).

11. Procédé selon l'une quelconque des revendications 6 à 10, comprenant en outre l'étape consistant à compresser le coussin d'air (5) après ladite étape de pliage subséquente ou ladite étape de roulage pour former un emballage de coussin d'air pour l'insertion ou la retenue dans un logement de coussin d'air (21, 31).

12. Procédé selon l'une quelconque des revendications précédentes, comprenant en outre l'étape consistant à relier la seconde extrémité (10) du coussin d'air (5) à au moins une partie d'un logement de coussin d'air (12) avant tout autre étape de procédé indiquée dans les revendications précédentes.

13. Procédé selon l'une quelconque des revendications précédentes, dans lequel le coussin d'air (5) a une forme cylindrique.

14. Coussin d'air (5) emballé selon un procédé en accord avec l'une quelconque des revendications précédentes.

15. Coussin d'air (5) selon la revendication 14, réalisé en tant que partie d'un agencement de sécurité de levage de capot moteur ou de couvercle pour un véhicule à moteur.
